# EUROPÄISCHE PATENTSCHRIFT

(11) **EP 4 050 331 B1**
(45) Veröffentlichungstag und Bekanntmachung des Hinweises auf die Patenterteilung: **06.11.2024**
(21) Anmeldenummer: 22157312.4
(22) Anmeldetag: 17.02.2022
(51) Int. Cl.: G01N 29/14, B33Y 10/00, G01N 29/34, G01N 29/44

(54) **VORRICHTUNG UND VERFAHREN ZUR PROZESSKONTROLLE**
APPARATUS AND METHOD FOR PROCESS CONTROL
DISPOSITIF ET PROCÉDÉ POUR LE CONTRÔLE DE PROCESSUS

(30) Priorität: 24.02.2021 DE 102021000998
(43) Veröffentlichungstag der Anmeldung: 31.08.2022
(73) Patentinhaber: KSB SE & Co. KGaA, 67227 Frankenthal (DE)
(72) Erfinder: Nobel, Tammuz, 67227 Frankenthal (DE); van Geldern, Maike, 67227 Frankenthal (DE)

(56) Entgegenhaltungen:
- US-A1- 2003 149 553
- US-A1- 2019 195 833

## Beschreibung

Die Erfindung betrifft eine Vorrichtung zur Prozesskontrolle, die mindestens einen akustischen Sensor und eine optische und/oder akustische Warneinrichtung aufweist.

Für eine effiziente und qualitätsorientierte Produktion müssen der Einsatz von Ressourcen ebenso wie Abweichungen im Produktionsprozess kontinuierlich überwacht werden. Hierfür gibt es vielfältige Systeme, die die Betriebs- und die Produktionsdaten erfassen und entsprechend aufbereitet auswerten.

Häufige Ursache von fehlerhaften Teilen oder Produkten sind schleichend auftretende Störungen an Fertigungsmaschinen und Anlagen. Beispielsweise wird die notwendige Prozesstemperatur um wenige Grad unterschritten oder eine Prozessbewegung weicht um wenige Millimeter ab. Deswegen wird immer mehr dazu übergegangen, Prozesse und Maschinen kontinuierlich zu überwachen und zu kontrollieren.

Beispielsweise kann die Akustik von Prozessen ein Überwachungsmerkmal sein. Dabei kann die akustische Prozesskontrolle zerstörungsfrei erfolgen. Des Weiteren kann die akustische Überwachung von Bearbeitungs-, Montage- und Fügeprozessen fertigungsintegriert ausgeführt werden. Bei der mechanischen Bearbeitung durch Bohren, Drehen, Schleifen, Sägen, bei Montagevorgängen wie Einpressen oder Einrasten oder bei Fügevorgängen wie z. B. Reibschweißen oder beim Fügen durch Umformung entstehen bei jedem Prozess charakteristische Schwingungen bzw. Geräusche. Durch die Erfassung von Frequenzen und Schallpegeln wird die Körper- oder Luftschallschallsignatur während des Prozesses permanent erfasst, mit der bekannten Schallsignatur von fehlerfrei durchgeführten Prozessen als Referenz verglichen, ausgewertet und eine Klassifizierung der Überprüfung vorgenommen. Ein Prüfsystem kann anwendungsspezifisch ausgewählte berührende oder berührungslose Schallaufnehmer sowie eine programmierbare Steuer- und Auswerteinheit mit entsprechender Software umfassen.

Die Einrichtung der akustischen Prozesskontrolle erfolgt durch die Erfassung eines typischen Klangspektrums einer Reihe von fehlerfrei ablaufenden Prozessen. Aus diesen Daten werden ein Klangmuster errechnet und als Sollwert definiert sowie die zulässigen Toleranzen bezüglich der Frequenzen und der Schallpegel festgelegt. Die Prozessüberwachung erfolgt durch anwendungsspezifisch ausgewählte Schallaufnehmer. Hierfür werden entweder berührende Beschleunigungssensoren eingesetzt, die z. B. in den Werkstückträger integriert werden und den Körperschall erfassen, oder es kommen berührungslose Systeme wie Mikrophone zur Luftschallerfassung oder Laser- bzw. Ultraschall-Vibrometer zur Körperschallerfassung zum Einsatz.

Die Prozessüberwachung kann einerseits nur während des Fügevorgangs erfolgen, indem z. B. das charakteristische Klickgeräusch beim Einrasten eines Schnellsteckverbinders erkannt wird, andererseits ist auch eine kontinuierliche Überwachung z. B. des Bearbeitungsgeräuschs einer Werkzeugmaschine möglich. Das erfasste Geräusch wird mit dem vorprogrammierten Referenzmuster verglichen. Wenn die Abweichung vom Referenzmuster einen vorgegebenen Sollwert überschreitet, kann eine Alarm- oder Fehlermeldung ausgegeben werden.

Beispielgebend beschreibt die DE 20 2004 007 637 U1 eine Vorrichtung zum akustischen Prüfen von Werkstücken bzw. von Prozessen nach dem Stand der Technik. Die Vorrichtung umfasst eine Anregeeinheit, eine Signalaufnahmeeinheit sowie eine Auswerteinheit.

Die US 2019/0195833 A1 beschreibt eine Vorrichtung, umfassend einen Schallemissionssensor, einen Vorverstärker, einen Demodulator und einen Sender, durch die mithilfe der CHIRP Demodulation die Bildung und die Ausbreitung von Defekten, beispielsweise von Rissen, detektiert werden können.

Die US 2003/0149553 A1 offenbart ein Verfahren zur Charakterisierung einer Schallquelle unter Zufilfenahme von akustischen Emissionen der Schallquelle.

Da für eine akustische Überwachung nach dem Stand der Technik ein typisches Klangmuster bekannt sein muss, ist es schwierig, individuell konfigurierte Fertigungsprozesse fertigungsintegriert zu überwachen. Das nachträgliche Überprüfen der Werkstücke ist besonders dann ungünstig, wenn die Fertigungskosten nicht ganz unerheblich sind.

Aufgabe der Erfindung ist es, eine Vorrichtung zur Prozesskontrolle bereitzustellen, die den Zustand eines Fertigungsprozesses während der Fertigung überwacht und anzeigt. Des Weiteren soll die Vorrichtung die Fertigungsprozesse von individuellen Einzelteilen überwachen und kontrollieren. Die Vorrichtung soll bei Überschreiten von festgelegten Toleranzen einen Alarm absetzen können. Dabei soll die Vorrichtung einfach und kostengünstig realisiert werden können.

Diese Aufgabe wird erfindungsgemäß durch eine Vorrichtung zur Prozesskontrolle gemäß Anspruch 1 und ein Verfahren zur Prozesskontrolle gemäß Anspruch 3 gelöst. Bevorzugte Varianten sind den Unteransprüchen, der Beschreibung und der Zeichnung zu entnehmen.

Erfindungsgemäß umfasst die Vorrichtung ein akustisches Ausgabegerät. Ein akustisches Ausgabegerät dient der Schall-, Ton- und/oder Klangerzeugung. Das ist ein Vorgang, mit dem in der Luft oder einem anderen Medium Schallwellen aktiv erzeugt werden. Solche Schallwellen mit Frequenzen im Hörbereich des Menschen im Sinne der Erfindung werden auch als Töne, Klänge oder Geräusche bezeichnet.

Gemäß der Erfindung ist das akustische Ausgabegerät als ein Synthesizer ausgeführt sein. Ein solches Ausgabegerät dient der zielgerichteten Schallerzeugung hinsichtlich Lautheit, Schärfe, Tonheit, Rauhigkeit und Schwankungsstärke.

Ein Synthesizer ist ein zu den Elektrophonen gezähltes Musikinstrument, welches auf elektronischem Wege per Klangsynthese Töne erzeugt und oft als zentrales Werkzeug in der Produktion elektronischer Musik Einsatz findet.

Ein mögliches Anwendungsgebiet der Vorrichtung zur Prozesskontrolle ist ein Roboterarm eines generativen Fertigungsverfahrens. Ein solcher Roboterarm kann mit verschiedenen Werkzeugen bestückt sein, wie beispielsweise ein Werkzeug für selektives Laserschmelzen, Kaltgasspritzen, Auftragsschweißen und/oder Extrudieren von schmelzfähigem Kunststoff.

Die Bezeichnung generative Fertigungsverfahren umfasst alle Fertigungsverfahren, bei denen Material Schicht für Schicht aufgetragen und somit dreidimensionale Bauteile erzeugt werden. Dabei erfolgt der schichtweise Aufbau computergesteuert aus einem oder mehreren flüssigen oder festen Werkstoffen nach vorgegebenen Maßen und Formen. Beim Aufbau finden physikalische oder chemische Härtungs- oder Schmelzprozesse statt. Typische Werkstoffe für das 3D-Drucken sind Kunststoffe, Kunstharze, Keramiken, Metalle, Carbon- und Graphitmaterialien.

Erfindungsgemäß erzeugt der Synthesizer eine Schallfolge, die den Gesetzen der Harmonielehre genügt. Erfindungsgemäß ist die Grundlage der erzeugten Schallimpulse und/oder Tonimpulse der ausgeführte Weg und/oder die ausgeführten Prozessschritte eines Roboterarms in einem generativen Fertigungsprozess. Daraus ergibt sich eine Istmelodie , die mittels eines Prozessors mit einer Sollmelodie, die auf der Grundlage der Stellsignale des Wegs und/oder der Prozessschritte zu erwarten ist, verglichen werden kann. Aus dem Vergleich können Abweichungen im generativen Produktionsprozess festgestellt werden. Die Harmonik ist ein umfassender Begriff aus der Musiktheorie und ein Ordnungsgrundsatz des Zusammenklangs mehrerer Töne und kann als zeitgleiche Komponente der Musik angesehen werden. Des Weiteren wird unter der Harmonielehre die systematische Erfassung der Akkordgestalten und des dur-moll-tonalen Klangraumes im Sinne der traditionellen Vorgaben der Musik verstanden. Die Harmonielehre ist somit insbesondere die Verbindung der Klänge zu musikalisch logischen Folgen.

Eine Melodie ist in der Musik eine charakteristisch geordnete zeitliche Folge als Gestalt aus Tönen. Sie ist durch die auftretenden Intervalle, die Richtung von deren Tonhöhen und ihren Rhythmus bestimmt. Meist ist sie in sich geschlossen, in verschiedene Abschnitte gegliedert. Kennzeichnend für eine Melodie ist, dass sie als selbständige und ausdrucksvolle Gestalt wahrgenommen wird. Die maßgebliche Eigenschaft der Melodie ist die Möglichkeit ihrer Wiedererkennung sowie ihrer Reproduktion unabhängig von der Tonhöhe, in der sie ursprünglich stand. Aus diesem Grund ist eine Melodie keine Abfolge von konkreten Tonhöhen, sondern deren durch einen Abstraktionsprozess gewonnene Abfolge von Intervallen.

In einer alternativen Variante der Erfindung erzeugt der Synthesizer aus dem ausgeführten Weg und/oder den ausgeführten Prozessschritten eines Roboterarms eines generativen Prozesses eine Rhythmusfolge. Dabei kann der Istrhythmus mit dem Sollrhythmus auf Basis der Stellsignale verglichen werden, um Abweichungen im generativen Produktionsprozess festzustellen.

In der Musik ist die Notation der Rhythmen als Folgen von Notenwerten und Pausenwerten üblich, also mit den musikalischen Dauernzeichen der Notenschrift. Der Rhythmus nimmt dort Bezug auf den gegebenen, meist regelmäßig wiederholten Takt und erhält dadurch eine Betonungsstruktur. Ein Rhythmus gegen den Grundschlag des Takts wird als synkopiert bezeichnet. Wie spannungsreich ein Rhythmus empfunden wird, ist stark davon abhängig, in welchem Mischungsverhältnis und in welcher Weise seine Akzente mit dem Grundschlag zusammenfallen oder von ihm abweichen. Ein Polyrhythmus ist eine Schichtung von Rhythmen von gleicher Gesamtdauer. Er erlaubt die Darstellung komplexer musikalischer Zeitstrukturen im allgemeineren Sinn des Rhythmus.

Gemäß der Erfindung sind mögliche Stellsignale der auszuführenden Prozessschritte der Weg des Lasers und die vorgegebene Energieeinstellung des Lasers beim selektiven Laserschmelzen. Des Weiteren ist ein Stellsignal beispielsweise der Vorschub des Drahtes beim Auftragsschweißen. Aus diesen Stellsignalen generiert der Prozessor und der Synthesizer eine Schallfolge, die zur Prozesskontrolle dient.

Erfindungsgemäß weist die Vorrichtung mindestens einen akustischen Sensor auf. Akustische Sensoren sind Bauelemente in technischen Systemen, die Informationen über Zustände liefern, wobei akustische Effekte ausgenutzt werden und akustische Wandler elektronisch auswertbare Signale erzeugen. Bei passiven akustischen Sensoren wird ein Geräusch, das der beobachtete Vorgang selbst erzeugt, ausgewertet. Aktive akustische Sensoren erzeugen ein Ultraschallfeld, das von dem beobachteten Vorgang beeinflusst wird. So können z.B. aus Schallreflexionen die Lagen von Grenzflächen, durch Schallbeugung an Kanten oder aus Frequenzänderungen Geschwindigkeiten ermittelt werden. Akustische Sensoren verursachen bei der Anwendung auf Werkstoffe keine schädlichen Nebenwirkungen auf lebende Organismen. Sie arbeiten zerstörungsfrei und lassen sich gut an die jeweiligen Erfordernisse anpassen.

Gemäß der Erfindung weist die Vorrichtung mindestens einen Speicher und mindestens einen Prozessor auf. Ein Prozessor ist ein programmierbares Rechenwerk, das gemäß den übergebenen Befehlen einen Algorithmus vorantreibt. Im erfindungsgemäßen Fall besteht die Datenverarbeitung aus einem Soll- und Istvergleich von Schall- bzw. Tonimpulsen. Wird eine zu große Abweichung bei diesem Vergleich festgestellt, entspricht dies einer Abweichung im generativen Prozess und die Vorrichtung alarmiert auf optische und/oder akustische Weise.

Ein Alarm ist ein akustisches oder optisches Notsignal. In einem allgemeineren Sinne wird als Alarm jedwede Warnung bezeichnet, die auf eine drohende Gefahr bzw. Prozessfehler aufmerksam macht und zu erhöhter Wachsamkeit aufruft.

Idealerweise vergleicht der Prozessor das Istspektrum mit dem Normspektrum der Ton- bzw. Schallfolge. Das Normspektrum generiert der Prozessor mit integriertem Speicher aus den Stellsignalen, die an den Roboterarm mit den integrierten Werkzeugen der generativen Fertigungsverfahren gesendet werden. Gleichzeitig erhält der Prozessor vom akustischen Sensor ein Istspektrum der Ton- bzw. Schallfolge, die der Synthesizer aus den Bewegungs- und/oder Prozesssignalen erzeugt hat. Durch Abgleich dieser Spektren lassen sich kleine Abweichungen direkt anzeigen. Dies ist besonders vorteilhaft, wenn die Prozesszeit des Fertigungsverfahrens lange und die damit verbunden Herstellungskosten hoch sind.

Bei Überschreiten bzw. Unterschreiten von Warngrenzen, die als zulässige Toleranzen bezüglich der Frequenzen und Schallpegel festgelegt werden können, kann die Vorrichtung zur Prozesskontrolle ein Unterbrechen der generativen Fertigung des Roboterarmes bewirken. Dadurch können eventuell nötige Korrekturen direkt veranlasst werden, so dass ein eventuell in der Herstellung teures Bauteil nicht direkt als Ausschussware entsorgt werden muss.

In einer alternativen Variante der Erfindung kann zur Überprüfung der Bewegung bzw. der Prozessschritte des Roboterarms bei der Herstellung von Standartbauteilen auch das Schallsignal des akustischen Sensors mit verifizierten Schallsignalen aus vorangegangen Prozessausführungen abgeglichen werden.

Weitere Merkmale und Vorteile der Erfindung ergeben sich aus der Beschreibung eines Ausführungsbeispiels anhand einer Zeichnungen und aus der Zeichnung selbst.

Dabei zeigt:

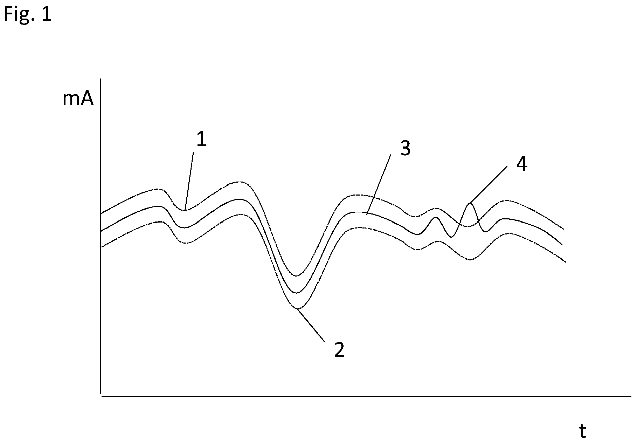

- Fig. 1: einen zeitlichen Verlauf des akustischen Sensorsignals.

In der Fig. 1 ist ein zeitlicher Verlauf des akustischen Sensorsignals 3 mit dazugehörigem unteren Toleranzband 2 und oberen Toleranzband 1 dargestellt. Der Prozessor ermittelt aus den Stellsignalen an den Roboterarm eine Sollmelodie und konfiguriert daraus ein Toleranzfeld, in dem das Sensorsignal liegen darf. Exemplarisch ist eine Abweichung der Bewegung des Roboterarms und ein daraus resultierendes Überschreiten 4 des akustischen Sensorsignals dargestellt. Dies führt dann zu einer akustischen und/oder optischen Warnanzeige, so dass gegebenenfalls der Ausführungsfehler korrigiert werden kann, ohne dass das komplette generativ gefertigte Bauteil als Ausschussware aussortiert werden muss.

## Patentansprüche

1. Vorrichtung zur Prozesskontrolle eines Roboterarms, die mindestens einen akustischen Sensor, eine optische und/oder akustische Warneinrichtung, ein akustisches Ausgabeelement das als digitaler Synthesizer ausgebildet ist und einen Prozessor aufweist, **dadurch gekennzeichnet,**
**dass** der Synthesizer eingerichtet ist eine Schallfolge zu erzeugen, die den Gesetzen der Harmonielehre genügt, wobei die Grundlage von erzeugten Schallimpulsen und/oder Tonimpulsen der ausgeführte Weg und/oder die ausgeführten Prozesschritte des boterarms bspw. in einem generativen Fertigungsprozess ist bzw. sind und sich daraus eine Istmelodie ergibt, die mit dem akutischen Sensor aufnehmbar ist und wobei der Prozessor eingerichtet ist, die Istmelodie mit einer Sollmelodie, die auf der Grundlage der Stellsignale des Wegs und/oder der Prozessschritte zu erwarten ist, zu vergleichen.

2. Vorrichtung nach Anspruch 1, **dadurch gekennzeichnet, dass** die Vorrichtung ein Speichermedium umfasst.

3. Verfahren zur Prozesskontrolle eines Roboterarms, mit folgenden Schritten:
• Erzeugung einer Musterfolge von elektrischen Signalen zur Bewegung eines Roboterarms, bspw. in einem generativen Fertigungsprozess, und zur Ausführung von Arbeitsschritten,
• Erzeugung einer harmonischen Melodie auf Basis der elektrischen Signale durch ein akustisches Ausgabeelement, ausgeführt als digitaler Synthesizer,
• Aufnehmen der harmonischen Melodie mit mindestens einer akustischen Sensorik, wobei sich daraus eine Istmelodie ergibt,
• Abgleich der Istmelodie mit einer Sollmelodie, die auf der Grundlage der Stellsignale des Wegs und/oder der Prozessschritte zu erwarten ist, durch einen Prozessor zum Signalabgleich,
• Optische und/oder akustische Anzeige des ermittelten Zustandes der Prozesskontrolle.

## Claims

1. Device for the process control of a robot arm, which has at least one acoustic sensor, one optical and/or acoustic warning apparatus, one acoustic output element that is in the form of a digital synthesizer and one processor, **characterized in that** the synthesizer is configured to produce a sound sequence that obeys the laws of harmonics, wherein the basis for produced sound pulses and/or tone pulses is/are the travel carried out and/or the process steps carried out by the robot arm in a generative manufacturing process, for example, and an actual melody is produced therefrom that is able to be recorded using the acoustic sensor, and wherein the processor is configured to compare the actual melody with a desired melody, which is to be expected on the basis of the actuating signals of the travel and/or the process steps.

2. Device according to Claim 1, **characterized in that** the device comprises a storage medium.

3. Method for the process control of a robot arm, comprising the following steps:
• generating a pattern sequence of electrical signals for moving a robot arm, for example in a generative manufacturing process, and for carrying out work steps,
• generating a harmonic melody on the basis of the electrical signals by way of an acoustic output element that is in the form of a digital synthesizer,
• recording the harmonic melody using at least one acoustic sensor system, wherein an actual melody is produced therefrom,
• comparing the actual melody with a desired melody, which is to be expected on the basis of the actuating signals of the travel and/or the process steps by way of a signal comparison processor,
• optically and/or acoustically displaying the ascertained state of the process control.

## Revendications

1. Dispositif de commande de processus d'un bras de robot, lequel dispositif comprend au moins un capteur acoustique, un module d'avertissement optique et/ou acoustique, un élément de sortie acoustique qui est conçu comme un synthétiseur numérique et qui comporte un processeur,
**caractérisé en ce que**
le synthétiseur est adapté pour générer une séquence acoustique qui satisfait aux lois de l'harmonie, la base des impulsions acoustiques générées et/ou des impulsions sonores étant le chemin réalisé et/ou les étapes de processus réalisées du bras de robot, par exemple dans un processus de fabrication génératif, et le résultat étant une véritable mélodie qui peut être enregistrée à l'aide du capteur acoustique et le processeur étant adapté pour comparer la mélodie réelle à une mélodie de consigne que l'on peut attendre sur la base des signaux de commande du chemin et/ou des étapes du processus.

2. Dispositif selon la revendication 1, **caractérisé en ce que** le dispositif comprend un support de mémorisation.

3. Procédé de commande de processus d'un bras de robot, ledit procédé comprenant les étapes suivantes :
• générer une séquence modèle de signaux électriques pour déplacer un bras de robot, par exemple dans un processus de fabrication génératif, et pour exécuter des étapes de travail,
• générer une mélodie harmonique sur la base des signaux électriques par le biais d'un élément de sortie acoustique, conçu comme un synthétiseur numérique,
• enregistrer la mélodie harmonique à l'aide d'au moins un système de capteurs acoustiques, le résultat étant une véritable mélodie,
• comparer la mélodie réelle à une mélodie de consigne, qui est attendue en fonction des signaux de commande du chemin et/ou des étapes de processus, par le biais d'un processeur de comparaison de signaux,
• effectuer un affichage visuel et/ou acoustique de l'état déterminé de la commande de processus.
